# EUROPÄISCHE PATENTANMELDUNG

(11) **EP 2 420 422 A2**
(43) Veröffentlichungstag der Anmeldung: **22.02.2012**
(21) Anmeldenummer: 11006110.8
(22) Anmeldetag: 26.07.2011
(51) Int. Cl.: B60W 30/16, B60W 30/14, B60W 50/08

(54) **Verfahren zum Betrieb eines Geschwindigkeitsregelsystems eines Kraftfahrzeugs und Kraftfahrzeug**

(30) Priorität: 21.08.2010 DE 102010035086
(71) Anmelder: Audi AG, 85045 Ingolstadt (DE); Audi Electronics Venture GmbH, 85080 Gaimersheim (DE)
(72) Erfinder: Schuberth Stefan, 85057 Ingolstadt (DE)
(74) Vertreter: Thielmann, Frank

(57) **Zusammenfassung**

Verfahren zum Betrieb eines Geschwindigkeitsregelsystems (2) eines Kraftfahrzeugs (1), wobei in einem Normalbetriebsmodus die Geschwindigkeit des Kraftfahrzeugs (1) auf eine fahrerseitig wählbare Wunschgeschwindigkeit geregelt wird, wobei als Reaktion auf eine vorbestimmte fahrerseitige Bedienaktion bei einem mittels wenigstens einem Umfeldsensor (4) detektierten vorausfahrenden Referenzfahrzeug auf der selben Fahrspur (16) ein Folgebetriebsmodus aktiviert wird, in dem bei langsamer als die Wunschgeschwindigkeit fahrendem Referenzfahrzeug auf einen zeitlichen oder räumlichen Abstand, insbesondere eine Zeitlücke, zu dem Referenzfahrzeug geregelt wird.
Als Bedienaktion wird insbesondere ein Abbremsen bei Annäherung an das vorausfahrende Fahrzeug verwendet.

## Beschreibung

Die Erfindung betrifft ein Verfahren zum Betrieb eines Geschwindigkeitsregelsystems eines Kraftfahrzeugs, wobei in einem Normalbetriebsmodus die Geschwindigkeit des Kraftfahrzeugs auf eine fahrerseitig wählbare Wunschgeschwindigkeit geregelt wird, sowie ein Kraftfahrzeug mit einem Geschwindigkeitsregelsystem.

Geschwindigkeitsregelsysteme (häufig auch als Geschwindigkeitsregelanlage - GRA bekannt) sind heute bekannt und in vielen Kraftfahrzeugen bereits eingesetzt. Die Grundidee eines solchen Geschwindigkeitsregelsystems ist, dass der Fahrer eine Wunschgeschwindigkeit, beispielsweise eine aktuell gefahrene Geschwindigkeit, festlegt, und das Kraftfahrzeug dann derart Eingriff auf die Ansteuerung des Motors nimmt, dass die Wunschgeschwindigkeit möglichst exakt gehalten wird. Geschwindigkeitsregelsysteme sind vor allem deswegen beliebt, da die Kosten sehr gering sind, da die Funktion im Motorsteuergerät realisiert werden kann und nur ein zusätzliches Bedienteil, beispielsweise ein Hebel oder eine Bedieneinheit am Lenkrad, benötigt wird. Zudem sind Geschwindigkeitsregelsysteme ein für den Fahrer leicht verständliches Fahrerassistenzsystem.

Der Nutzen eines Geschwindigkeitsregelsystems ist allerdings auf Straßen mit nur geringer Fahrzeugdichte beschränkt. Zwar sind inzwischen Geschwindigkeitsregelsysteme bekannt, die ein Bedienelement, beispielsweise einen Hebel oder zwei entsprechende Tasten aufweisen, um die Wunschgeschwindigkeit während des Betriebs des Geschwindigkeitsregelsystems zu verändern, so dass bei einer Folgefahrt hinter einem anderen Fahrzeug die Wunschgeschwindigkeit entsprechend angepasst werden kann, jedoch sind derartige ständige Beschleunigungs- und Abbremsaktionen des Fahrers mittels des Bedienelements des Geschwindigkeitsregelsystems hochgradig unkomfortabel und unexakt.

Der Erfindung liegt daher die Aufgabe zugrunde, eine Erweiterung der Funktionsfähigkeit eines Geschwindigkeitsregelsystems anzugeben, die auf einfache und durch den Fahrer bestimmte Weise einen komfortableren Einsatz des Geschwindigkeitsregelsystems auch in Bereichen hoher Fahrzeugdichte ermöglicht.

Zur Lösung dieser Aufgabe ist bei einem Verfahren der eingangs genannten Art erfindungsgemäß vorgesehen, dass als Reaktion auf eine vorbestimmte fahrerseitige Bedienaktion bei mittels einem wenigstens einem Umfeldsensor detektierten vorausfahrenden Referenzfahrzeug auf derselben Fahrspur ein Folgebetriebsmodus aktiviert wird, in dem bei langsamer als die Wunschgeschwindigkeit fahrendem Referenzfahrzeug auf einen zeitlichen oder räumlichen Abstand, insbesondere eine Zeitlücke, zu dem Referenzfahrzeug geregelt wird.

Erfindungsgemäß wird also vorgeschlagen, eine günstige Umfeldsensorik zu verwenden, um eine Erweiterung der Funktion des Geschwindigkeitsregelsystems um einen Andockbetriebsmodus bzw. Folgebetriebsmodus zu ermöglichen. Als Grundlage wird also der Normalbetriebsmodus des Geschwindigkeitsregelsystems verwendet, es existiert also wie bekannt ein Regelbetrieb, in dem eine vom Fahrer gewählte Wunschgeschwindigkeit vom System gehalten wird. Es kann dabei optional vorgesehen sein, dass diese Wunschgeschwindigkeit über wenigstens ein Bedienelement erhöht oder verringert werden kann.

Als Erweiterung ist nun jedoch vorgesehen, dass, folgt das Kraftfahrzeug mit deaktiviertem oder aktiviertem Normalbetriebsmodus einem anderen Fahrzeug, durch einen Fahrer, also fahrerinitiiert, eine bestimmte Bedienaktion ("Andockbedienung") vorgenommen werden kann, welche einen Folgebetriebsmodus, der dem Geschwindigkeitsregelsystem neu hinzugefügt wird, aktiviert. Bedingung hierfür ist, dass ein Referenzfahrzeug existiert, welches sich auf derselben Fahrspur wie das eigene Kraftfahrzeug (im Fahrschlauch) befindet und bewegt. Verzögert oder beschleunigt dieses vom Fahrer ausgewählte Referenzfahrzeug unterhalb der Wunschgeschwindigkeit, so wird versucht, diesem Objekt mit Einhaltung eines zeitlichen oder räumlichen Wunschabstands zu folgen. Das bedeutet, dass das Geschwindigkeitsregelsystem die Geschwindigkeit auch selbsttätig verringern können muss bzw. sogar einen Bremseingriff durchführen können muss. Dies kann einfach dadurch realisiert werden, dass der Motor bzw. die Bremsen des Kraftfahrzeugs durch das Steuergerät des Geschwindigkeitsregelsystems direkt oder indirekt, also unmittelbar oder über ein entsprechendes weiteres Steuergerät, angesteuert werden können. So ist es möglich, den Wunschabstand möglichst genau zu halten.

Eine Annäherung an ein vorausfahrendes Fahrzeug kann mithin im Rahmen des erfindungsgemäßen Verfahrens dadurch bewältigt werden, dass man entweder den im Normalbetriebsmodus vorliegenden Regelvorgang des Geschwindigkeitsregelsystems abbricht, sich hinter dem Objekt in Folgefahrt begibt und das Geschwindigkeitsregelsystem im Folgebetriebsmodus wieder aktiviert, oder man kann, insbesondere bei geringeren Differenzgeschwindigkeiten, auch bei aktivem Normalbetriebsmodus die Bedienaktion ausführen. In beiden Fällen ist die Folge, dass dem Referenzfahrzeug dann gefolgt wird.

Es wird also zusammenfassend der Kundennutzen eines Geschwindigkeitsregelsystems erhöht, indem wenigstens ein Umfeldsensor, insbesondere aufweisend einen Mindesterfassungsbereich von ca. 100 m, verwendet wird und ein Folgebetriebsmodus hinzugefügt wird, der eine komfortable Verwendung des Geschwindigkeitsregelsystems auf Straßen mit großer Verkehrsdichte ermöglicht. Die Systemgrenzen sind dabei einfach gehalten, denn neben der Standardfunktion des Geschwindigkeitsregelsystems, dem Normalbetriebsmodus, existiert nur die fahrerinitiierte Abstandsregelung im Folgebetriebsmodus. Es liegt eine durchgängige Systemperformance vor, also keine Tagesperformance. Die Annäherungsperformance ist immer gleich, da ohne Fahrerinitialisierung keine Abstandsregelung auftritt. Nebenspurstörungen werden weitgehend vermieden. Das hier beschriebene Konzept lässt sich vorteilhaft im gesamten Geschwindigkeitsbereich einsetzen.

Es sei an dieser Stelle noch angemerkt, dass die Erweiterung der Funktionalität eines Geschwindigkeitsregelsystems, wie sie hier vorgeschlagen wird, besonders kostengünstig und einfach zu realisieren ist, wenn weitgehend Elemente verwendet werden, die ohnehin schon im Kraftfahrzeug vorhanden sind, beispielsweise Umfeldsensoren anderer Fahrzeugsysteme und Bedienelemente, die ohnehin bereits für das Geschwindigkeitsregelsystem oder für andere Zwecke vorgesehen sind.

Zweckmäßigerweise kann vorgesehen sein, dass der Folgebetriebsmodus wenigstens teilweise zugunsten des Normalbetriebsmodus deaktiviert wird, sobald als Deaktivierungsbedingung das Referenzfahrzeug schneller als die Wunschgeschwindigkeit fährt und/oder den Erfassungsbereich des Umfeldsensors und/oder die eigene Fahrspur verlässt. Das Referenzfahrzeug kann also so lange als Folgeobjekt dienen, bis es sich wieder entfernt (die Geschwindigkeit des Referenzfahrzeugs ist also größer als die eigene Wunschgeschwindigkeit und das Referenzfahrzeug fährt aus dem Sensorerfassungsbereich hinaus) oder es aus dem Fahrschlauch, also der aktuellen Fahrspur, ausschert. Dann kann wieder in den Normalbetriebsmodus übergegangen werden, wobei selbstverständlich auch andere Ausgestaltungen, die gegebenenfalls von weiteren Parametern abhängig sein können, denkbar sind.

So kann beispielsweise auch vorgesehen sein, dass bei Eintritt der oder einer Deaktivierungsbedingung zunächst mittels des wenigstens einen Umfeldsensors überprüft wird, ob ein neues Referenzfahrzeug auf der eigenen Spur vorhanden ist, wobei bei Vorliegen eines neuen Referenzfahrzeugs auf das neue Referenzfahrzeug, insbesondere mit dem selben Abstand, geregelt wird. Fällt also ein Folgeobjekt weg, indem es beispielsweise die Spur wechselt, so kann auch statt einer einfachen Deaktivierung des Folgebetriebsmodus vorgesehen sein, dass zunächst überprüft wird, ob sich nicht ein weiteres Fahrzeug auf der eigenen Fahrspur ohnehin als Referenzfahrzeug anbietet. Dies gilt insbesondere dann, wenn ein langsamer als die Wunschgeschwindigkeit fahrendes Fahrzeug auf der eigenen Fahrspur vorausfahrend detektiert wird, so dass davon auszugehen ist, dass der Fahrer ohnehin wieder den Folgebetriebsmodus aktivieren würde. Ein derartiges Fahrzeug kann dann als neues Referenzfahrzeug übernommen werden, wobei hier gegebenenfalls auch andere bzw. weitere Bedingungen gegeben sein können, worauf im Folgenden noch näher eingegangen werden wird. In diesem Fall kann sich also das Geschwindigkeitsregelsystem selbsttätig ein neues Ziel suchen, welches dann als neues Referenzfahrzeug dient. Dabei ist es besonders vorteilhaft, auf denselben zeitlichen oder räumlichen Wunschabstand zu regeln, der bereits bezüglich des vorangehenden Referenzfahrzeugs gewählt wurde. So ändern sich die Bedingungen der Folgefahrt praktisch nicht.

In diesem Zusammenhang kann weiterhin vorgesehen sein, dass bei Detektion eines näher als das Referenzfahrzeug an dem eigenen Kraftfahrzeug befindlichen Drittfahrzeugs auf der eigenen Fahrspur mittels des wenigstens einen Umfeldsensors auf das Drittfahrzeug als neues Referenzfahrzeug, insbesondere mit demselben Abstand, geregelt wird. Auch dann, wenn das Referenzfahrzeug weiterhin detektiert werden kann, kann jedoch überprüft werden, ob beispielsweise ein Drittfahrzeug bereits zwischen das Referenzfahrzeug und das eigene Kraftfahrzeug auf die eigene Fahrspur eingeschert ist, das sich als neues Referenzfahrzeug anbietet.

Über diese beiden gerade beschriebenen Bedingungen können auch Objekte, die sich, allerdings neben der eigenen Spur, in Folgefahrt befinden und nach dem Einscheren selbst relevant werden, ebenso berücksichtigt werden wie in einer Kolonnenfahrt nach dem Ausscheren des nähesten Objekts auf das ursprünglich übernächste, dann näheste Objekt geregelt werden kann.

In diesem Zusammenhang kann es jedoch vorteilhaft sein, wenn eine Regelung auf ein neues Referenzfahrzeug statt eines Abbruchs des Folgebetriebsmodus nur dann vorgenommen wird, wenn das neue Referenzfahrzeug eine in einem bestimmten Geschwindigkeitsbereich um die eigene Geschwindigkeit liegende Geschwindigkeit aufweist, insbesondere die Geschwindigkeit des neuen Referenzfahrzeugs maximal um 10 km/h von der eigenen Geschwindigkeit abweicht. Dabei ist zwar eine für den Kunden nicht erkennbare Geschwindigkeitsgrenze vorhanden, jedoch ist auf diese Weise sichergestellt, dass im Rahmen der Steuerungsmöglichkeiten des Geschwindigkeitsregelsystems auch eine hinreichend schnelle Einregelung auf den Abstand zum neuen Referenzfahrzeug ermöglicht wird.

Zweckmäßigerweise kann vorgesehen sein, dass als Bedienaktion des Fahrers die Betätigung eines Systembedienelements, insbesondere eines Wiederaufnahme-Bedienelements oder eines Geschwindigkeitssetz-Bedienelements, und/oder die Betätigung der Bremse verwendet wird. Es ist also grundsätzlich denkbar, bereits vorhandene Bedienelemente des Geschwindigkeitsregelsystems mehrfach zu belegen, um damit die Aktivierung des Folgebetriebsmodus zu ermöglichen. Beispielsweise kann hierfür ein Wiederaufnahme-Bedienelement (Resume) oder eine Geschwindigkeitssetz-Taste (Set) verwendet werden. In besonders vorteilhafter Ausgestaltung der vorliegenden Erfindung dient jedoch eine Betätigung der Bremse des Kraftfahrzeugs als Bedienaktion. Ist man beispielsweise im Normalbetriebsmodus unterwegs und fährt auf ein langsamer fahrendes Fahrzeug auf, so ist ein manuelles Bremsen notwendig. Wird der Normalbetriebsmodus durch einen Bremseingriff deaktiviert, wird aber aufgrund der Daten des wenigstens einen Umfeldsensors erkannt, dass diese Bremsung aufgrund eines langsameren Fahrzeugs durchgeführt wurde und dieses Fahrzeug im Folgeabstand ist, so kann sich das Geschwindigkeitsregelsystem nach Lösen der Bremse wieder im Folgebetriebsmodus automatisch aktivieren und das Fahrzeug, aufgrund dessen der Bremseingriff erfolgte, als Referenzfahrzeug, also Folgeobjekt, auswählen und diesem wie oben bereits beschrieben folgen. Die Tatsache, dass der Fahrer bezüglich eines langsamer fahrenden Fahrzeuges bremst, wird in diesem Fall also als Bedienaktion verstanden, um für den Fahrer hochgradig komfortabel den Folgebetriebsmodus zu aktivieren, gegebenenfalls so lange, wie das Kraftfahrzeug vorhanden ist, um dann ebenso automatisch wieder auf die Wunschgeschwindigkeit im Normalbetriebsmodus regeln zu können.

In weiterer Ausgestaltung der vorliegenden Erfindung kann vorgesehen sein, dass als Abstand, insbesondere als Zeitlücke, der zum Zeitpunkt der Bedienaktion vorliegende Abstand, insbesondere die zum Zeitpunkt der Bedienaktion vorliegende Leitlücke, gewählt wird. Während üblicherweise bei Folgefahrten die Zeitlücke als Regelgröße verwendet wird, ist diese auch im erfindungsgemäßen Verfahren grundsätzlich vorteilhaft zu wählen. Es kann nun vorgesehen sein, dass als Abstand, insbesondere als Zeitlücke, die Situation zum Zeitpunkt der Bedienaktion betrachtet wird. Das Geschwindigkeitsregelsystem übernimmt den Abstand (die Zeitlücke) zum Zeitpunkt der Andockbedienung des Fahrers und versucht in der Folgefahrt diesen einzuregeln. In dieser Ausgestaltung kann der Fahrer später durch einfaches Übertreten und die damit verbundene Annäherung und durch erneutes Durchführen der Bedienaktion den Regelabstand verkürzen bzw. durch manuelles Vergrößern des Abstands und dann eine erneute Andockbedienung den Regelabstand ebenso vergrößern.

Weiterhin kann vorgesehen sein, dass bei fahrerseitiger Betätigung wenigstens eines Abstandsbedienelements, insbesondere eines Hebels, der Abstand verändert wird. Möglich ist es also auch, ähnlich wie bei der nachträglichen Anpassung der Wunschgeschwindigkeit, eine nachträgliche Anpassung des Abstands, insbesondere der Zeitlücke, durch den Fahrer zu ermöglichen, indem beispielsweise eine "Plus" und eine "Minus"-Taste vorgesehen sind oder ein in zwei verschiedenen Richtungen betätigbarer Hebel verwendet wird, um den Wunschabstand beliebig einstellen zu können.

Grundsätzlich kann im Rahmen der vorliegenden Erfindung auch vorgesehen sein, dass der Abstand, auf den bezüglich des Referenzfahrzeugs geregelt werden soll, fahrerseitig vorausgewählt wird. Auf diese Weise kann der Fahrer beispielsweise einen Wunschabstand, der für ihn ideal ist, bereits grundsätzlich im Geschwindigkeitsregelsystem hinterlegen, so dass dieser bei jeder Aktivierung des Folgebetriebsmodus weiterverwendet werden kann. In diesem Fall ist der Regelabstand mithin unabhängig von dem Abstand, der zum Zeitpunkt der Andockbedienung, also der Bedienaktion, vorliegt.

Grundsätzlich kann es beim erfindungsgemäßen Verfahren selbstverständlich auch vorkommen, dass im Folgebetriebsmodus bis zum Stillstand geregelt wird. Dann kann zwar vorgesehen sein, dass das Geschwindigkeitsregelsystem einfach deaktiviert wird. Vorzugsweise ist jedoch vorgesehen, dass nach Erreichen des Stillstands entweder ein Anfahren bei aufrechterhaltenem Folgebetriebsmodus nur fahrerinitiiert, insbesondere bei Betätigung eines Gaspedals zum Anfahren, möglich ist oder der Folgebetriebsmodus, insbesondere unter Berücksichtigung einer Anfahrüberwachungssensorik, aufrechterhalten wird. Es kann also vorgesehen sein, dass bei einem Stillstand des Kraftfahrzeugs ein Anfahren nur durch einen unmittelbaren Fahrertrigger, beispielsweise durch Betätigung des Gaspedals, jedoch auch die Betätigung anderer Bedienelemente ist denkbar, erfolgt. Alternativ dazu ist es jedoch auch möglich, den Folgebetriebsmodus als eine Art Stop-and-Go-Funktion weiter zu betreiben, wobei eine ergänzende Anfahrüberwachungssensorik notwendig ist, aus deren Sensordaten gefolgert werden kann, wann ein erneutes Anfahren des eigenen Kraftfahrzeugs möglich bzw. sinnvoll ist. Es sei an dieser Stelle klarstellend darauf hingewiesen, dass sich der Folgebetriebsmodus im Allgemeinen bei der vorliegenden Erfindung rein auf die Längsführung bezieht.

Zweckmäßigerweise kann vorgesehen sein, dass die Aktivität des Folgebetriebsmodus durch ein Anzeigeelement, insbesondere ein hinterleuchtetes Fahrzeugsymbol benachbart zu einer Aktivitätsanzeige für das Geschwindigkeitsregelsystem, angezeigt wird. Es kann also im Anzeigekonzept ein allgemeines Aktivitätssymbol für das Geschwindigkeitsregelsystem, beispielsweise ein GRA-Symbol, vorgesehen sein, wobei zur Anzeige des aktiven Folgebetriebsmodus ein weiteres Symbol, beispielsweise ein grünes Fahrzeug neben dem Aktivierungssymbol, vorgesehen werden kann. Es kann im Übrigen auch vorgesehen sein, ein Anzeigeelement vorzusehen, welches anzeigt, dass ein mögliches Referenzfahrzeug erkannt wurde und es nun möglich ist, durch Durchführen der Bedienaktion darauf anzudocken und den Folgeberiebsmodus zu aktivieren. Ersichtlich sind verschiedenste Anzeigekonzepte denkbar, um den aktuellen Zustand des Geschwindigkeitsregelsystems und die Bedienmöglichkeiten dem Fahrer zur Kenntnis zu bringen.

In einer Ausführungsform des erfindungsgemäßen Verfahrens kann vorgesehen sein, dass bei Überschreiten einer maximal durch das Geschwindigkeitsregelsystem auslösbaren Grenzbremsverzögerung durch die aktuell zur Aufrechterhaltung des Abstands nötige Bremsverzögerung eine Fahrerübernahmeaufforderung ausgegeben wird und das Geschwindigkeitsregelsystem deaktiviert wird. Da es sich beim Geschwindigkeitsregelsystem um ein Komfortsystem handelt, kann die vornehmbare Bremsverzögerung beschränkt sein, beispielsweise durch eine maximale Grenzbremsverzögerung. Es können jedoch Fälle auftreten, beispielsweise bei einem starken Bremsen des Referenzfahrzeugs, in denen die Grenzbremsverzögerung nicht ausreicht, um einen riskanten Abstand zu vermeiden. Dann kann eine Fahrerübernahmeaufforderung erfolgen, beispielsweise indem im Kraftfahrzeug ein akustischer Hinweis, insbesondere ein Gong, ertönt und/oder ein Statussymbol, insbesondere ein GRA-Symbol, rot beleuchtet wird oder dergleichen. Auch hier sind verschiedene Ausgestaltungen denkbar.

Vorzugsweise kann ein Umfeldsensor mit einer Erfassungsreichweite von wenigstens 100 m, insbesondere 150 m, verwendet werden. Auf diese Weise können als Referenzfahrzeuge infrage kommende Objekte sicher erfasst werden und die benötigte Bandbreite von Abständen, insbesondere Zeitlücken, stehen über die verschiedenen Geschwindigkeiten zur Verfügung. Mit besonderem Vorteil kann ein ohnehin im Kraftfahrzeug verbauter, für wenigstens ein weiteres Fahrzeugsystem, insbesondere ein Sicherheitssystem, genutzter Sensor verwendet werden. So kann beispielsweise ein Umfeldsensor verwendet werden, der für ein oder mehrere Sicherheitssysteme ohnehin im Kraftfahrzeug verbaut ist, beispielsweise für ein innerstädtisches Pre-Crash-System und/oder ein Bremsassistenzsystem. Solche Umfeldsensoren haben meist auch die zuvor genannten Erfassungsreichweiten von mindestens 100 m. Auf diese Weise kann das erfindungsgemäße Verfahren besonders günstig realisiert werden, da der Umfeldsensor ohnehin schon für eine Sicherheitsfunktion im Kraftfahrzeug verbaut ist. Werden zudem ohnehin verbaute Bedienelemente verwendet, insbesondere das Bremspedal, so müssen auch keine zusätzlichen Bedienelemente hinzugefügt werden. So ist es letztlich möglich, das erfindungsgemäße Verfahren zu realisieren, wenn allein die Anzeigeelemente, beispielsweise durch Erweiterung um ein Symbol für den Folgebetriebsmodus, ergänzt werden.

Es kann, insbesondere zur Verbesserung der Spurzuordnung detektierter Kraftfahrzeuge, wenigstens ein weiterer Umfeldsensor verwendet werden und/oder als Umfeldsensor ein Radarsensor und/oder ein Lidar-Sensor und/oder ein PMD-Sensor und/oder eine Kamera verwendet werden und/oder es können zur Auswertung der Sensordaten Daten weiterer Fahrzeugsysteme, insbesondere eines Navigationssystems oder eines Sensorsystems, welches beispielsweise Linien wie Fahrspurbegrenzungen detektiert, berücksichtigt werden. Die genannten Arten von Umfeldsensoren sind gängige, günstig realisierbare Umfeldsensoren, die auch für das erfindungsgemäße Verfahren Einsatz finden können. Ein Steuergerät des Geschwindigkeitsregelsystems empfängt dann die, gegebenenfalls bereits aufbereiteten, Sensordaten und wählt diese im Rahmen der beschriebenen Funktionalitäten aus. Es kann beispielsweise vorgesehen sein, dass grundsätzlich aus den Daten der im Kraftfahrzeug verbauten Umfeldsensoren bereits ein sogenanntes Umfeldmodell ermittelt wird, in den verschiedenen Positionen um das Kraftfahrzeug herum Informationen über deren Belegung zugeordnet werden. Aus einem solchen Umfeldmodell können durch das Geschwindigkeitsregelsystem gegebenenfalls gezielt die notwendigen Informationen abgefragt werden, um beispielsweise die Existenz eines möglichen Referenzfahrzeugs oder im Folgebetriebsmodus dessen relevante Eigenschaften zu ermitteln. Zur Auswertung der Sensordaten können im Sinne einer Informationsfusion selbstverständlich auch Daten weiterer Fahrzeugsysteme berücksichtigt werden, beispielsweise Daten eines Navigationssystems oder eines Sensorsystems, welches beispielsweise Linien wie Fahrspurbegrenzungen detektiert, wenn es um die Spurzuordnung detektierter Fahrzeug geht.

In weiterer Ausgestaltung der vorliegenden Erfindung kann vorgesehen sein, dass ein Tachometerkranz zur Anzeige der Wunschgeschwindigkeit verwendet wird. Gerade bei der Ausgestaltung der vorliegenden Erfindung ist es im Folgebetriebsmodus nicht immer gegeben, dass tatsächlich auch die Wunschgeschwindigkeit gefahren werden kann, so dass eine Anzeige am Tachometer selber, insbesondere an einem Tachometerkranz, besonders vorteilhaft verwendbar ist.

Neben dem Verfahren betrifft die Erfindung auch ein Kraftfahrzeug, umfassend ein Geschwindigkeitsregelsystem mit einem zur Durchführung des erfindungsgemäßen Verfahrens ausgebildeten Steuergerät. Sämtliche Ausführungen bezüglich des erfindungsgemäßen Verfahrens lassen sich analog auf das erfindungsgemäße Kraftfahrzeug übertragen, mit dem mithin dieselben Vorteile wie beim erfindungsgemäßen Verfahren erzielt werden können.

Insbesondere umfasst das Kraftfahrzeug zusätzlich auch noch wenigstens einen Umfeldsensor, auf dessen gegebenenfalls aufbereitete Sensordaten das Geschwindigkeitsregelsystem bei Bedarf zugreifen kann. Auch die Verarbeitung von Daten anderer Fahrzeugsysteme, beispielsweise eines Navigationssystems, ist denkbar.

Das Geschwindigkeitsregelsystem kann dabei eigene Bedienelemente und Anzeigeelemente umfassen, gegebenenfalls jedoch auch auf andere Bedienelemente, beispielsweise ein Bremspedal bezüglich der Bedienaktion, zugreifen. Als Anzeigemittel können verschiedene, den Betriebszustand des Geschwindigkeitsregelsystems anzeigende, insbesondere hinterleuchtbare Symbole vorgesehen sein, wobei zusätzlich auch ein Tachometerkranz verwendet werden kann, um die Wunschgeschwindigkeit darzustellen. Verschiedenste Ausgestaltungen sind hier denkbar.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: ein erfindungsgemäßes Kraftfahrzeug,
- Fig. 2: Bedien- und Anzeigeelemente des erfindungsgemäßen Kraftfahrzeugs,
- Fig. 3: eine erste Darstellung einer Verkehrssituation,
- Fig. 4: eine zweite Darstellung einer Verkehrssituation,
- Fig. 5: eine dritte Darstellung einer Verkehrssituation, und
- Fig. 6: eine vierte Darstellung einer Verkehrssituation.

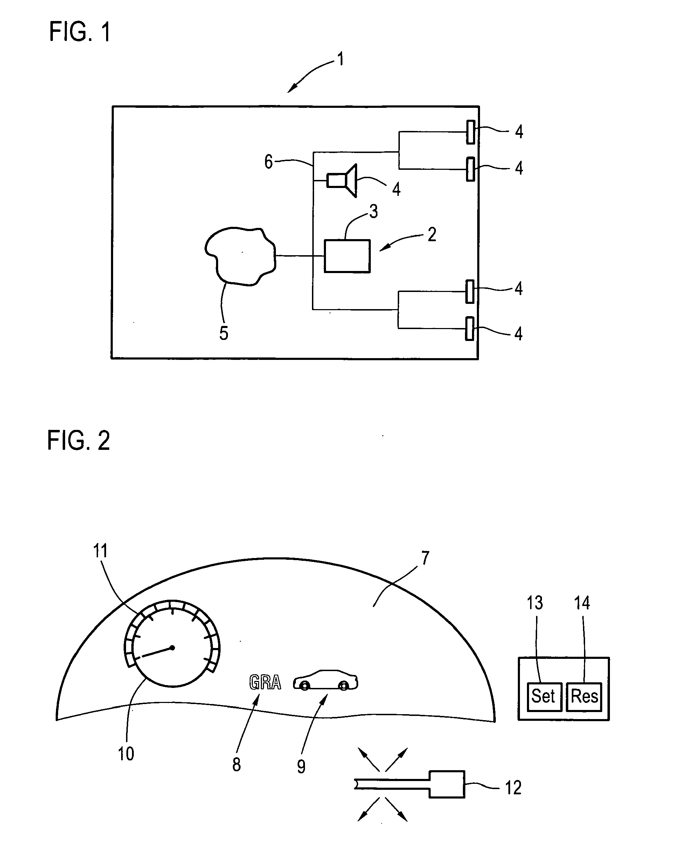

Fig. 1 zeigt eine Prinzipskizze eines erfindungsgemäßen Kraftfahrzeugs 1. Es umfasst ein Geschwindigkeitsregelsystem 2 mit einem Steuergerät 3, welches dazu ausgebildet ist, in einem Normalbetriebsmodus auf eine vom Fahrer des Kraftfahrzeugs 1 vorgegebene Wunschgeschwindigkeit zu regeln. Im vorliegenden Fall ist das Steuergerät 3 jedoch auch zum Betrieb des Geschwindigkeitsregelsystems 2 in einem Folgebetriebsmodus ausgebildet.

Hierzu hat das Steuergerät 3, welches im Übrigen nicht allein dem Geschwindigkeitsregelsystem 2 zugeordnet sein muss, sondern auch ein anderes Steuergerät, beispielsweise ein Motorsteuergerät, mit Zusatzfunktionalität sein kann, Zugriff auf die Daten von Umfeldsensoren 4, von denen hier mehrere beispielhaft dargestellt sind. Bei den Umfeldsensoren 4 kann es sich beispielsweise um Radar-Sensoren, Lidar-Sensoren, PMD-Sensoren, Kameras oder sonstige Umfeldsensoren handeln. Die Umfeldsensoren 4 weisen zumindest teilweise eine Erfassungsreichweite auf, die größer als beispielsweise 100 m ist. Auch die Daten weiterer, bei 5 angedeuteter Fahrzeugsysteme können vom Steuergerät 3 verarbeitet und berücksichtigt werden, beispielsweise die Daten eines Navigationssystems.

Die Kommunikation zwischen den verschiedenen Fahrzeugsystemen wird im Übrigen über ein Bussystem 6, beispielsweise einen CAN-Bus, ermöglicht.

Es sei an dieser Stelle noch angemerkt, dass die Umfeldsensoren 4 auch anderen Fahrzeugsystemen zugeordnet sein können, insbesondere wenigstens einem Sicherheitssystem, beispielsweise einem Bremsassistenzsystem oder einem Pre-Crash-System.

Das Steuergerät 3 ist nun dazu ausgebildet, bei einer vorbestimmten Bedienaktion des Fahrers zu überprüfen, ob sich das Kraftfahrzeug 1 gerade in Folgefahrt befindet, das bedeutet, dass sich ein Referenzfahrzeug, dem das Kraftfahrzeug 1 folgt, auf der eigenen Fahrspur befindet und sich bewegt. Ist dies der Fall, wird der Folgebetriebsmodus aktiviert, und es wird mittels einer bestimmten Zeitlücke auf das Referenzfahrzeug geregelt, statt dass wie im Normalbetriebsmodus zwangsläufig die Wunschgeschwindigkeit gehalten werden soll. Im Folgebetriebsmodus ist es also der Abstand, hier die Zeitlücke, auf die geregelt wird; auch hierzu werden selbstverständlich Daten der Umfeldsensoren 4 verwendet.

Fig. 2 zeigt beispielhaft mögliche Realisierungen von Bedien- und Anzeigeelementen, die bei der vorliegenden Erfindung Anwendung finden können. So ist in dem Kraftfahrzeug 1 eine Instrumententafel 7 vorgesehen, auf der ein GRA-Symbol 8 und ein Fahrzeugsymbol 9 vorgesehen sind. Die Symbole 8, 9 können in verschiedenen Farben hinterleuchtet werden. Ist beispielsweise der Normalbetriebsmodus aktiv, so kann das GRA-Symbol 8 grün hinterleuchtet sein, das Fahrzeugsymbol 9 aber dunkel. Wird der Folgebetriebsmodus aktiviert, so kann auch das Fahrzeugsymbol 9 grün hinterleuchtet werden. Es ist im Rahmen der vorliegenden Erfindung auch denkbar, das Fahrzeugsymbol 9 immer dann in einer anderen Farbe zu hinterleuchten, beispielsweise in gelb, oder blinkend zu hinterleuchten, wenn ein mögliches Referenzfahrzeug durch die Umfeldsensoren 4 detektiert wurde und somit eine Aktivierung des Folgebetriebsmodus durch die fahrerseitig durchzuführende Bedienaktion möglich ist.

Befindet sich das Geschwindigkeitsregelsystem 2 im Folgebetriebsmodus, und wird eine maximal zulässige Grenzbremsverzögerung von der Bremsverzögerung überschritten, die nötig wäre, um den vom Fahrer gewählten Wunschabstand zu dem Referenzfahrzeug nicht auf riskante Art zu unterschreiten, so können die Symbole 8, 9 weiterhin genutzt werden, um eine nun durchzuführende Fahrerübernahmeaufforderung mit darauffolgender Deaktivierung des Geschwindigkeitsregelsystems 2 anzuzeigen. Hierzu können beispielsweise die Symbole 8, 9 rot hinterleuchtet werden und es kann ein akustisches Signal, beispielsweise ein Gong, ertönen. Selbstverständlich sind auch andere Möglichkeiten zur Ausgabe einer Fahrübernahmeaufforderung denkbar, beispielsweise sprachliche Ansagen oder dergleichen.

An der Instrumententafel 7 ist ferner ein analoges Tachometer 10 angeordnet, welches von einem in eine Vielzahl von Segmenten unterteilten Tachometerkranz 11 umgeben ist. Die Segmente des Tachometerkranzes 11 sind einzeln beleuchtbar und werden genutzt, um die aktuell eingestellte Wunschgeschwindigkeit für den Normalbetriebsmodus anzuzeigen. Denn die Wunschgeschwindigkeit bleibt auch im Folgebetriebsmodus erhalten, während die tatsächliche Geschwindigkeit des Kraftfahrzeugs 1 die Wunschgeschwindigkeit unterschreiten kann, so dass mittels des Tachometerkranzes 11 dem Fahrer die aktuell eingestellte Wunschgeschwindigkeit dennoch weiterhin zur Kenntnis gebracht wird.

Dem Geschwindigkeitsregelsystem 2 ist ferner als Bedienelement ein Hebel 12 zugeordnet, der beispielsweise am Lenkrad angeordnet sein kann. Durch Bewegung des Hebels nach oben und unten kann die Wunschgeschwindigkeit schrittweise erhöht und erniedrigt werden. An dem Hebel 12 ist als zusätzliche Einstellmöglichkeit aber auch realisiert, dass durch Bewegung des Hebels 12, die beispielsweise nur bei aktiviertem Folgebetriebsmodus möglich ist, die Zeitlücke, auf die geregelt wird, also der Wunschabstand, erhöht oder erniedrigt werden kann. Somit sind auf komfortable Art und Weise Betriebsparameter des Geschwindigkeitsregelsystems 2 über den Hebel 12 einstellbar. Am Lenkrad oder seitlich neben der Instrumententafel 7 können als weitere Bedienelemente Taster 13, 14 angeordnet sein, hier ein Geschwindigkeits-Bedienelement 13 und ein Wiederaufnahme-Bedienelement 14. Neben ihrer üblichen Funktion können diese Bedienelemente auch dazu ausgebildet sein, dass ihre Betätigung als die vorbestimmte Bedienaktion zur Aktivierung des Folgebetriebsmodus dient.

Selbstverständlich ist das in Fig. 2 dargestellte Anzeige- und Bedienkonzept nur beispielhaft zu verstehen. Insbesondere sei an dieser Stelle bereits angemerkt, dass es auch möglich ist, einen voreingestellten Wunschabstand, also eine voreingestellte Wunschzeitlücke, zu verwenden, die ebenso über bestimmte Bedienelemente eingegeben werden kann. Diese wird dann im Folgebetriebsmodus grundsätzlich verwendet.

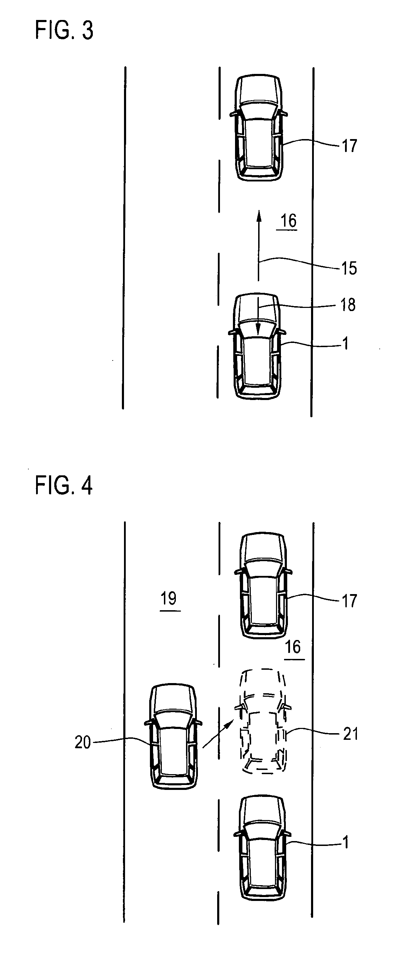

Weitere Ausgestaltungen des erfindungsgemäßen Verfahren sollen nun anhand der in Fig. 3 bis Fig. 6 dargestellten Verkehrssituationen näher erläutert werden.

Fig. 3 zeigt das erfindungsgemäße Kraftfahrzeug 1, wie es sich bei aktiviertem Normalbetriebsmodus mit der Wunschgeschwindigkeit, Pfeil 15, einem in derselben Spur 16 vorausfahrenden Fahrzeug 17 nähert. Als Reaktion betätigt der Fahrer die Bremse, um auf das vorausfahrende Fahrzeug 17 abzubremsen, wie durch den Pfeil 18 angedeutet wird. Diese Betätigung der Bremse wird nun im hier beschriebenen Ausführungsbeispiel als vorbestimmte Bedienaktion zur fahrerinitiierten Aktivierung des Folgebetriebsmodus verstanden. Bei Betätigung der Bremse wird zwar wie üblich der Normalbetriebsmodus deaktiviert, jedoch wird durch das Steuergerät 3 aufgrund der Daten der Umfeldsensoren 4 gleichzeitig überprüft, ob dieses Bremsen durch ein möglicherweise als Referenzfahrzeug geeignetes Fahrzeug 17 ausgelöst wurde. Dies ist vorliegend ersichtlich der Fall. Entsprechend schaltet nach Beendigung des Bremsvorgangs das Geschwindigkeitsregelsystem 2 in den Folgebetriebsmodus, wobei das Fahrzeug 17 als Referenzfahrzeug dient.

Zur Auswahl des Wunschabstands, hier also der Wunschzeitlücke, gibt es im Wesentlichen zwei Möglichkeiten. Zum einen kann vorgesehen sein, dass als Wunschzeitlücke die zum Zeitpunkt der Bedienaktion vorliegende Zeitlücke verwendet wird; es wird dabei also auf den Abstand geregelt, in dem der Fahrer das Kraftfahrzeug 1 auf das vorausfahrende Kraftfahrzeug 17 abbremste. Genauso ist es jedoch, wie oben bereits beschrieben, möglich, eine grundsätzlich zu verwendende Wunschzeitlücke in dem Geschwindigkeitsregelsystem 2 zu hinterlegen, auf welche bei Aktivierung des Folgebetriebsmodus dann geregelt wird.

Um die aktuell eingestellte Zeitlücke zum Referenzfahrzeug zu verändern, gibt es ebenso im Wesentlichen zwei Möglichkeiten. Zum einen kann, wie bereits beschrieben, der Hebel 12 verwendet werden. Möglich ist es aber auch, dass der Fahrer selbst durch eigene Beschleunigungs- bzw. Bremsmanöver den von ihm gewünschten Abstand herstellt, um dann erneut den Folgebetriebsmodus durch die oder eine der vorbestimmten Bedienaktionen zu aktivieren. Es sei an dieser Stelle noch angemerkt, dass es selbstverständlich auch möglich ist, den Folgebetriebsmodus durch unterschiedliche Bedienaktionen zu aktivieren, beispielsweise also durch einen Anbremsvorgang, wie bezüglich der Fig. 3 soeben beschrieben, oder aber durch Betätigung der Taster 13 und/oder 14.

Fig. 4 zeigt eine weitere Verkehrssituation, in der davon ausgegangen wird, dass das Kraftfahrzeug 1 mit dem im Folgebetriebsmodus aktivierten Geschwindigkeitsregelsystem 2 weiterhin dem Kraftfahrzeug 17 als Referenzfahrzeug folgt. Auf einer benachbarten Fahrspur 19 befindet sich ein Drittfahrzeug 20, welches auf die Fahrspur 16 einschert, vgl. die angedeutete Position 21. Durch die Umfeldsensoren 4 wird nun detektiert, dass sich ein Fahrzeug, nämlich das Drittfahrzeug 20, näher an dem eigenen Kraftfahrzeug 1 befindet als das bisherige Referenzfahrzeug 17. Entsprechend kann beim erfindungsgemäßen Verfahren nun vorgesehen sein, dass das Drittfahrzeug 20 als neues Referenzfahrzeug für den Folgebetriebsmodus hergenommen wird, so dass ab nun mit einer gleichbleibenden Wunschzeitlücke auf das Drittfahrzeug 20 als Referenzfahrzeug geregelt wird.

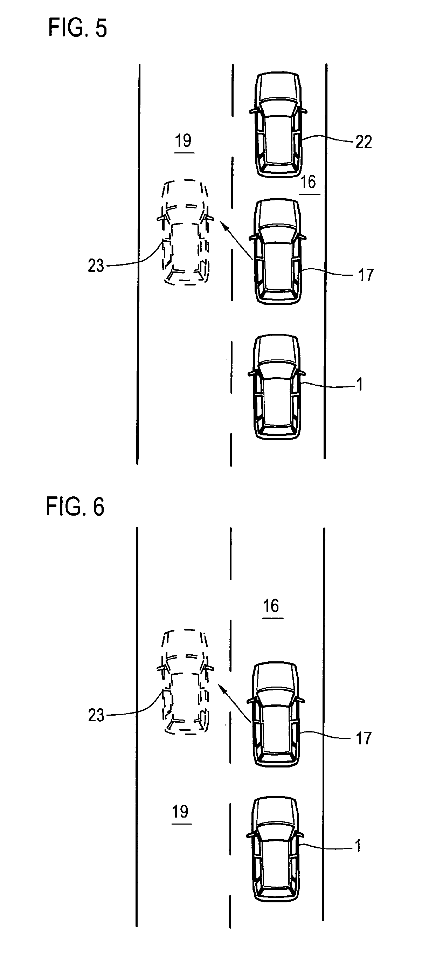

Eine ähnliche Situation zeigt die Fig. 5. Auch hier folgt das Kraftfahrzeug 1 weiter dem Kraftfahrzeug 17 als Referenzfahrzeug im Folgebetriebsmodus. Vor dem Kraftfahrzeug 17 fährt ein weiteres Fahrzeug 22, mithin das übernächste Fahrzeug zum erfindungsgemäßen Kraftfahrzeug. Das bislang als Referenzfahrzeug dienende Kraftfahrzeug 17 wechselt nun jedoch von der Fahrspur 16 auf die Fahrspur 19, vgl. die angedeutete Position 23. Hierdurch fällt es als Referenzfahrzeug weg.

Es kann nun jedoch vorgesehen sein, dass nicht einfach der Folgebetriebsmodus deaktiviert wird, sondern es wird durch die Umfeldsensoren 4 festgestellt, dass sich das weitere Kraftfahrzeug 24 ja noch vor dem eigenen Kraftfahrzeug 1 befindet und auf dessen Fahrspur 16 nun das nächstgelegene Fahrzeug ist. Mithin kann vorgesehen sein, es als neues Referenzfahrzeug aufzunehmen und nun auf dieses Fahrzeug 22 als Referenzfahrzeug zu regeln, wobei wiederum der Wunschabstand in Form der Wunschzeitlücke aufrechterhalten wird. So ist ein vereinfachtes Kolonnenfahren möglich, ohne dass der Fahrer jedes Mal neu in den Folgebetriebsmodus gehen muss.

Es sei an dieser Stelle noch angemerkt, dass es zweckmäßig sein kann, an die Übernahme eines weiteren Fahrzeugs 20, 22 als neues Referenzfahrzeug weitere Bedingungen zu knüpfen. Insbesondere ist im hier beschriebenen Ausführungsbeispiel als Bedingung vorgesehen, dass sich die Geschwindigkeiten des neuen Referenzfahrzeugs 20, 22 und des eigenen Kraftfahrzeugs 1 nicht um mehr als beispielsweise 10 km/h unterscheiden dürfen. Ist der Unterschied größer, wird das Geschwindigkeitsregelsystem 2 unter Gabe eines Hinweises an den Fahrer deaktiviert.

Es sei an dieser Stelle noch angemerkt, dass das Geschwindigkeitsregelsystem 2 letztlich für alle Geschwindigkeiten genutzt werden kann. Somit ist es insbesondere auch möglich, im Folgebetriebsmodus bis in den Stillstand herunterzuregeln. Hat das Kraftfahrzeug 1 den Stillstand erst erreicht, so gibt es mehrere Möglichkeiten, den weiteren Betrieb zu regeln. So kann vorgesehen sein, dass ein Wiederanfahren erst nach einer ein gewünschtes Wiederanfahren anzeigenden Aktion, beispielsweise einer Betätigung des Gaspedals oder eines der Taster 13, 14 möglich ist. Nachdem so fahrerinitiiert wieder angefahren wurde, wird der Folgebetriebsmodus weiter aufrechterhalten.

Eine andere Möglichkeit ist es, an dem Kraftfahrzeug, gegebenenfalls auch unter Verwendung der Umfeldsensoren 4, eine Anfahrüberwachungsensorik zu realisieren, deren Daten die Schlussfolgerung erlauben, ob ein Wiederanfahren möglich oder sinnvoll ist. In einer solchen Ausgestaltung weist das Geschwindigkeitsregelsystem 2 im Folgebetriebsmodus folglich auch eine Stop-and-Go-Funktion auf.

Fig. 6 stellt eine weitere Verkehrssituation dar, in der das als Referenzfahrzeug dienende Fahrzeug 17 die Fahrspur 16 verlässt und auf die Fahrspur 19 wechselt, angedeutete Position 23. In diesem Fall ist jedoch im Erfassungsbereich der Umfeldsensoren 4 kein weiteres Fahrzeug 22 vorhanden, so dass das Geschwindigkeitsregelsystem 2 problemlos wieder im Normalbetriebsmodus mit der Wunschgeschwindigkeit betrieben werden kann, auf den konsequenterweise auch wieder gewechselt wird.

Dabei sei an dieser Stelle nochmals deutlich erwähnt, dass die Regelung auf Abstand im Folgebetriebsmodus sich nur auf die Geschwindigkeiten bezieht, in denen die Wunschgeschwindigkeit unterschritten wird. Kann die Wunschgeschwindigkeit als maximale Geschwindigkeit gefahren werden, so kann wieder in den Normalbetriebsmodus umgeschaltet werden, gegebenenfalls unter der zusätzlichen Bedingung, dass das Referenzfahrzeug gänzlich aus dem Sensorerfassungsbereich herausfährt. Dies ist eine andere Bedingung, unter der der Folgebetriebsmodus zugunsten des Normalbetriebsmodus deaktiviert wird (ergänzend zur Darstellung in Fig. 6).

## Patentansprüche

1. Verfahren zum Betrieb eines Geschwindigkeitsregelsystems (2) eines Kraftfahrzeugs (1), wobei in einem Normalbetriebsmodus die Geschwindigkeit des Kraftfahrzeugs (1) auf eine fahrerseitig wählbare Wunschgeschwindigkeit geregelt wird,
**dadurch gekennzeichnet,**
**dass** als Reaktion auf eine vorbestimmte fahrerseitige Bedienaktion bei einem mittels wenigstens einem Umfeldsensor (4) detektierten vorausfahrenden Referenzfahrzeug auf der selben Fahrspur (16) ein Folgebetriebsmodus aktiviert wird, in dem bei langsamer als die Wunschgeschwindigkeit fahrendem Referenzfahrzeug auf einen zeitlichen oder räumlichen Abstand, insbesondere eine Zeitlücke, zu dem Referenzfahrzeug geregelt wird.

2. Verfahren nach Anspruch 1,
**dadurch gekennzeichnet,**
**dass** der Folgebetriebsmodus wenigstens teilweise zugunsten des Normalbetriebsmodus deaktiviert wird, sobald als Deaktivierungsbedingung das Referenzfahrzeug schneller als die Wunschgeschwindigkeit fährt und/oder den Erfassungsbereich des Umfeldsensors (4) und/oder die eigene Fahrspur (16) verlässt.

3. Verfahren nach Anspruch 2,
**dadurch gekennzeichnet,**
**dass** bei Eintritt der Deaktivierungsbedingung zunächst mittels des wenigstens einen Umfeldsensors (4) überprüft wird, ob ein neues Referenzfahrzeug auf der eigenen Spur (16) vorhanden ist, wobei bei Vorliegen eines neuen Referenzfahrzeugs auf das neue Referenzfahrzeug, insbesondere mit dem selben Abstand, geregelt wird.

4. Verfahren nach einem der vorangehenden Ansprüche,
**dadurch gekennzeichnet,**
**dass** bei Detektion eines näher als das Referenzfahrzeug an dem eigenen Kraftfahrzeug (1) befindlichen Drittfahrzeugs (20) auf der eigenen Fahrspur (16) mittels des wenigstens einen Umfeldsensors (4) auf das Drittfahrzeug (20) als neues Referenzfahrzeug, insbesondere mit demselben Abstand, geregelt wird.

5. Verfahren nach Anspruch 3 oder 4,
**dadurch gekennzeichnet,**
**dass** eine Regelung auf ein neues Referenzfahrzeug statt eines Abbruchs des Folgebetriebsmodus nur dann vorgenommen wird, wenn das neue Referenzfahrzeug eine in einem vorbestimmten Geschwindigkeitsbereich um die eigene Geschwindigkeit liegende Geschwindigkeit aufweist.

6. Verfahren nach einem der vorangehenden Ansprüche,
**dadurch gekennzeichnet,**
**dass** als Bedienaktion des Fahrers die Betätigung eines Systembedienelements, insbesondere eines Wiederaufnahme-Bedienelements (14) oder eines Geschwindigkeitssetz-Bedienelements (13), und/oder die Betätigung der Bremse verwendet wird.

7. Verfahren nach einem der vorangehenden Ansprüche,
**dadurch gekennzeichnet,**
**dass** als Abstand, insbesondere als Zeitlücke, der zum Zeitpunkt der Bedienaktion vorliegende Abstand, insbesondere die zum Zeitpunkt der Bedienaktion vorliegende Zeitlücke, gewählt wird.

8. Verfahren nach einem der vorangehenden Ansprüche,
**dadurch gekennzeichnet,**
**dass** bei fahrerseitiger Betätigung wenigstens eines Abstandsbedienelements, insbesondere eines Hebels (12), der Abstand verändert wird und/oder der Abstand fahrerseitig vorausgewählt wird.

9. Verfahren nach einem der vorangehenden Ansprüche,
**dadurch gekennzeichnet,**
**dass** im Folgebetriebsmodus bis zum Stillstand geregelt wird, wobei nach Erreichen des Stillstands entweder ein Anfahren bei aufrecht erhaltenem Folgebetriebsmodus nur fahrerinitiiert, insbesondere bei Betätigung eines Gaspedals zum Anfahren, möglich ist oder der Folgebetriebsmodus, insbesondere unter Berücksichtigung einer Anfahrüberwachungssensorik, aufrecht erhalten wird.

10. Verfahren nach einem der vorangehenden Ansprüche,
**dadurch gekennzeichnet,**
**dass** die Aktivität des Folgebetriebsmodus durch ein Anzeigeelement, insbesondere ein hinterleuchtetes Fahrzeugsymbol (9) benachbart einer Aktivitätsanzeige (8) für das Geschwindigkeitsregelsystem, angezeigt wird.

11. Verfahren nach einem der vorangehenden Ansprüche,
**dadurch gekennzeichnet,**
**dass** bei Überschreiten einer maximal durch das Geschwindigkeitsregelsystem (2) auslösbaren Grenzbremsverzögerung durch die aktuell zur Aufrechterhaltung des Abstands nötige Bremsverzögerung eine Fahrerübernahmeaufforderung ausgegeben wird und das Geschwindigkeitsregelsystem (2) deaktiviert wird.

12. Verfahren nach einem der vorangehenden Ansprüche,
**dadurch gekennzeichnet,**
**dass** ein Umfeldsensor (4) mit einer Erfassungsreichweite von wenigstens 100 m, insbesondere 150 m, verwendet wird und/oder ein ohnehin im Kraftfahrzeug (1) verbauter, für wenigstens ein weiteres Fahrzeugsystem (5), insbesondere ein Sicherheitssystem, genutzter Sensor (4) verwendet wird.

13. Verfahren nach einem der vorangehenden Ansprüche,
**dadurch gekennzeichnet,**
**dass**, insbesondere zur Verbesserung der Spurzuordnung detektierter Fahrzeuge, wenigstens ein weiterer Umfeldsensor (4) verwendet wird und/oder als Umfeldsensor (4) ein Radarsensor und/oder ein Lidar-Sensor und/oder ein PMD-Sensor und/oder eine Kamera verwendet wird und/oder zur Auswertung der Sensordaten Daten weiterer Fahrzeugsysteme (5), insbesondere eines Navigationssystems, berücksichtigt werden.

14. Verfahren nach einem der vorangehenden Ansprüche,
**dadurch gekennzeichnet,**
**dass** ein Tachometerkranz (11) zur Anzeige der Wunschgeschwindigkeit verwendet wird.

15. Kraftfahrzeug (1), umfassend ein Geschwindigkeitsregelsystem (2) mit einem zur Durchführung eines Verfahrens nach einem der vorangehenden Ansprüche ausgebildetem Steuergerät (3).
